# EUROPÄISCHE PATENTSCHRIFT

(11) **EP 2 729 324 B1**
(45) Veröffentlichungstag und Bekanntmachung des Hinweises auf die Patenterteilung: **19.04.2017**
(21) Anmeldenummer: 12731490.4
(22) Anmeldetag: 06.07.2012
(51) Int. Cl.: B60N 2/12

(54) **IN SEINER LÄNGSFÜHRUNG VORVERLAGERBARER FAHRZEUGSITZ MIT KLAPPBARER RÜCKENLEHNE**
VEHICLE SEAT THAT CAN BE MOVED FORWARDS IN ITS LONGITUDINAL GUIDE AND HAVING A FOLDING BACKREST
SIÈGE DE VÉHICULE À DOSSIER RABATTABLE POUVANT ÊTRE DÉPLACÉ VERS L'AVANT DANS SA GLISSIÈRE LONGITUDINALE

(30) Priorität: 07.07.2011 DE 102011078823
(43) Veröffentlichungstag der Anmeldung: 14.05.2014
(73) Patentinhaber: Johnson Controls Metals and Mechanisms GmbH & Co. KG, 42699 Solingen (DE)
(72) Erfinder: BECKER, Burckhard, 42655 Solingen (DE); UTZINGER, Karl, 66919 Weselberg (DE); WEBER, Erik, 66885 Bedesbach (DE)
(74) Vertreter: Bauer, Wulf
(86) Internationale Anmeldenummer: PCT/EP2012/063208
(87) Internationale Veröffentlichungsnummer: WO 2013/004807

(56) Entgegenhaltungen:
- EP-A2- 2 030 832
- DE-A1-102006 009 265

## Beschreibung

Die Erfindung bezieht sich auf einen Fahrzeugsitz
- mit einem Untergestell, das mindestens eine Bodenschiene und eine darin geführte Sitzschiene aufweist, die Schienen verlaufen in einer Längsrichtung,
- mit einer Verriegelung für eine Längsverstellung dieser Schienen gegeneinander in der Längsrichtung, die Verriegelung weist
   a) mehrere, unabhängig voneinander einrastbare und gemeinsam ausrastbare Sperrzähne, die baugleich und in einem Periodenmaß p in der Längsrichtung hintereinander angeordnet sind und
   b) eine Rastenleiste mit in der Längsrichtung der Schienen hintereinander in einem Periodenmaß r angeordneten Rastöffnungen auf, die mit der Bodenschiene verbunden ist,
- mit einer Memoryeinrichtung,
   c) die eine Memoryleiste aufweist, welche in einem Periodenmaß m in Längsrichtung der Schienen hintereinander angeordnete Zähne aufweist,
   d) die einen Auslösehebel aufweist, der an der Sitzschiene schwenkbar angeordnet ist und eine Flanke A hat, und
   e) die einen Schlitten aufweist, der ein an der Memoryleiste in Längsrichtung der Schienen geführtes Gehäuse aufweist, in welchem ein Rastelement schwenkbar gelagert ist, das einen mit den Zähnen der Memoryleiste zusammenwirkenden Rastzahn aufweist,
- mit einem Sitzträger, der mit dem Untergestell verbunden ist,
- mit einer Lehne,
   f) die um eine Schwenkachse schwenkbar mit dem Sitzträger verbunden ist und
   g) die einen Auslöser aufweist, über den ein Vorklappen der Lehne um die Schwenkachse ausgelöst werden kann,
- mit einem Entriegelungs-Bowdenzug, dessen Seele an einem unteren Ende mit der Entriegelungsklappe verbunden ist, und
- mit einem Komfort-Bowdenzug.

Ein derartiger Fahrzeugsitz ist aus der DE 10 2006 009 265 A1 bekannt.

Insbesondere für Personenkraftfahrzeuge, die auf einer Fahrzeugseite nur eine Tür haben, jedoch eine zweite Sitzreihe aufweisen, ist es bekannt, die Lehne nach vorne zu kippen und dann den zugehörigen Frontsitz in seiner Schienenführung nach vorn zu verlagern. Dadurch wird ein einfacherer Einstieg ermöglicht. Man spricht von einem Komforteinstieg oder einer Easy Entry Funktion. Hierzu ist an der Lehne ein Auslöser vorgesehen, der die normalerweise vorliegende Sperrung der Lehne aufhebt. Nach Betätigen des Auslösers kann die Lehne nach vorn geklappt werden. Durch diese Bewegung wird die Verriegelung der Längsverstellung freigezogen, der Sitz kann in der Schienenführung nach vorn geschoben werden. Erfolgt dies, wird die zuvor eingestellte Position des Sitzes in der Längsverstellung verlassen. Um diese Position später wiederfinden zu können, wenn der Sitz wieder aus der vorverlagerten Position rückbewegt wird, sind Memoryvorrichtungen bekannt. Die Erfindung bezieht sich auf derartige Memoryvorrichtungen. Sie zielt auf eine Verbesserung und Vereinfachung derartiger Memoryvorrichtungen ab.

Zum Stand der Technik wird zudem auf EP 1 390 226 B1 verwiesen. Aus DE 10 2009 010 226 A1 und DE 2004 001 388 U1 sind Memoryvorrichtungen ohne separate Memoryleiste bekannt.

Die Erfindung beabsichtigt, die Bauteile der Memoryvorrichtung so weit wie möglich in dem kanalförmigen Hohlraum anzuordnen, den die beiden Schienen begrenzen. Dadurch ist die Memoryvorrichtung gut geschützt. Nur die notwendigen Zugänge, um Betätigungen in die Memoryvorrichtung einzuleiten, sollen außerhalb der Schienen sein. Hierzu können in der Sitzschiene Durchbrüche vorhanden sein, beispielsweise Löcher oder dergleichen.

Hiervon ausgehend liegt der Erfindung die Aufgabe zugrunde, den Fahrzeugsitz der eingangs genannten Art dahingehend weiterzuentwickeln, dass die Memoryeinrichtung ein präzises Wiederfinden ermöglicht, einfacher aufgebaut ist und sich gut im kanalförmigen Hohlraum anordnen lässt.

Diese Aufgabe wird durch die Merkmale vom Anspruch 1 oder 14 gelöst. Gemäß Merkmalen der Erfindung:
- das Periodenmaß m der Memoryleiste ist gleich dem Abstand zweier unmittelbar benachbarter Raststellungen des Sperrzahns und der Rastenleiste;
- die Bauteile Memoryleiste und Schlitten befinden sich in einem von den Schienen begrenzten kanalförmigen Hohlraum,
- die Bauteile Auslösehebel, Schieber und Lagerelement bilden eine vormontierbare Baueinheit, die in die Sitzschiene eingebaut wird,
- die Zähne der Memoryleiste verlaufen in einer x-y-Ebene,
- der Haltenocken ist durch ein erste Feder in Einrastrichtung mit dem Anschlag vorbelastet, wodurch die Seele des Komfort-Bowdenzugs elastisch vorbelastet ist,
- der Mantel des Entriegelungs-Bowdenzugs hat im Normalzustand einen ersten Verlauf, und im betätigten Zustand dieses Entriegelungs-Bowdenzugs einen zweiten Verlauf, die beiden Verläufe sind unterschiedlich, der lichte Abstand zwischen den beiden Enden des Mantels unterscheidet sich um mindestens 4 mm, vorzugsweise um mindestens 5 mm,
- das untere Ende des Mantel des Entriegelungs-Bowdenzugs ist an dem Auslösehebel angeordnet, und
- das Rastelement führt eine Verriegelungsbewegung in der x-y-Ebene aus.

Der kleinste Abstand zweier benachbarter, unterschiedlicher Rastpositionen von Rastzähnen in der Rastenleiste wird als Inkrement t bezeichnet.

Weitere Ausführungsbeispiele und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im Folgenden näher erläutert werden. In dieser Zeichnung zeigen:
- Fig. 1: eine prinzipielle Seitenansicht eines kompletten Frontsitzes, der sich in der Normalposition befindet,
- Fig. 2: eine Darstellung wie in Figur 1, jedoch befindet sich die Lehne des gezeigten Kraftfahrzeugsitzes nun in vorgeklappter Position, die Verriegelung der Längsverstellung ist bereits gelöst, der Sitz ist jedoch noch nicht in der Längsführung nach vorn verlagert,
- Fig. 3: ein perspektivisches Montagebild der im Bereich der Längsführung angeordneten Teile des erfindungsgemäßen Sitzes,
- Fig. 4: eine perspektivische Darstellung einer vormontierten Baueinheit mit weiteren Teilen,
- Fig.5: eine perspektivische Darstellung einer Schienenführung mit Blick von hinten, schräg unten und für eine verbesserte Ausführung,
- Fig. 6: eine perspektivische Darstellung der Schienenführung gemäß Fig. 5 mit Blick von schräg hinten, außen und oben, jedoch ohne Darstellung der Schienen,
- Fig. 7: eine perspektivische Darstellung der Schienenführung gemäß Fig. 5 mit einem Blick sehr ähnlich wie in Fig. 6, jedoch nun mit dargestellten Schienen,
- Fig. 8: eine perspektivische Darstellung der Schienenführung gemäß Fig. 5 mit Blick von hinten, innen und etwas oberhalb der gegenüberliegenden Schienenführung,
- Fig. 9: eine Draufsicht auf eine Memoryleiste der Schienenführung nach Fig. 5 und
- Fig. 10: einen Schnitt entlang der Schnittlinie X-X in Fig. 9.

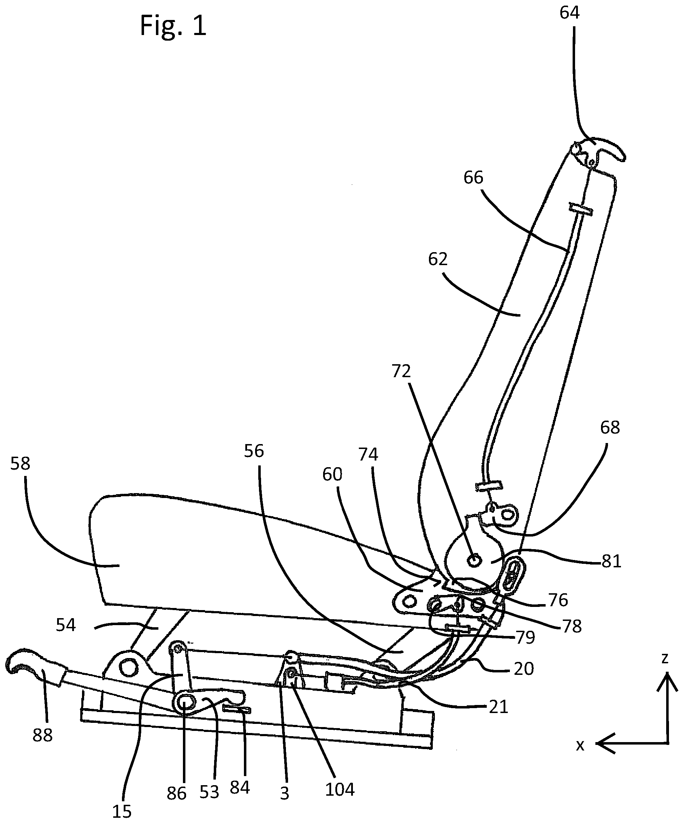

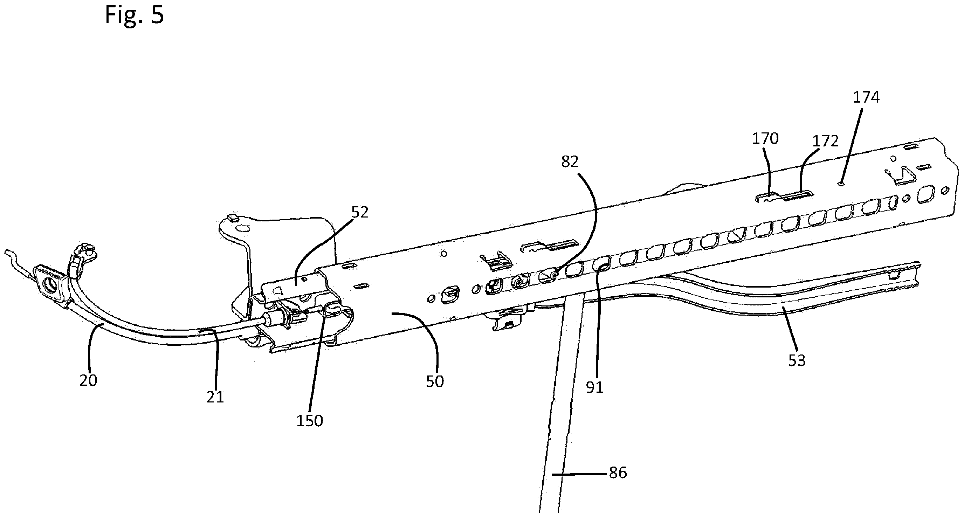

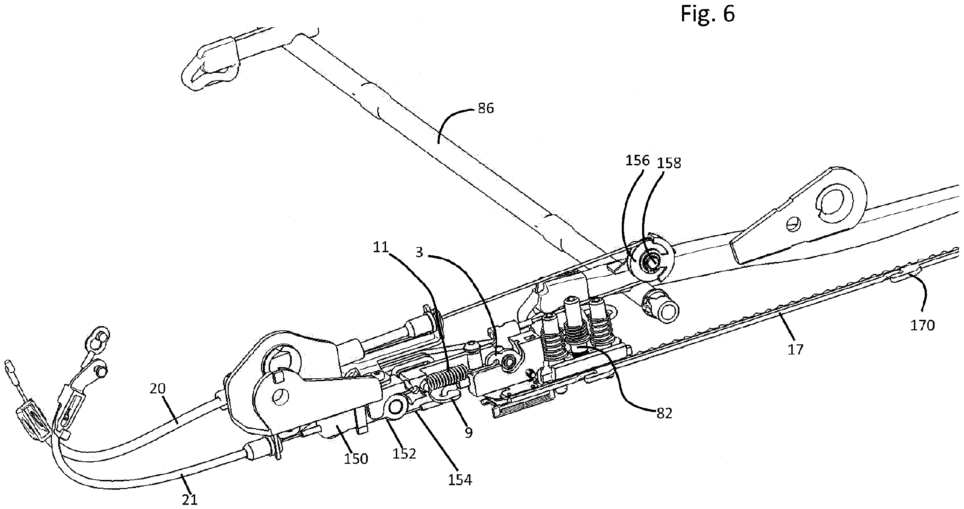

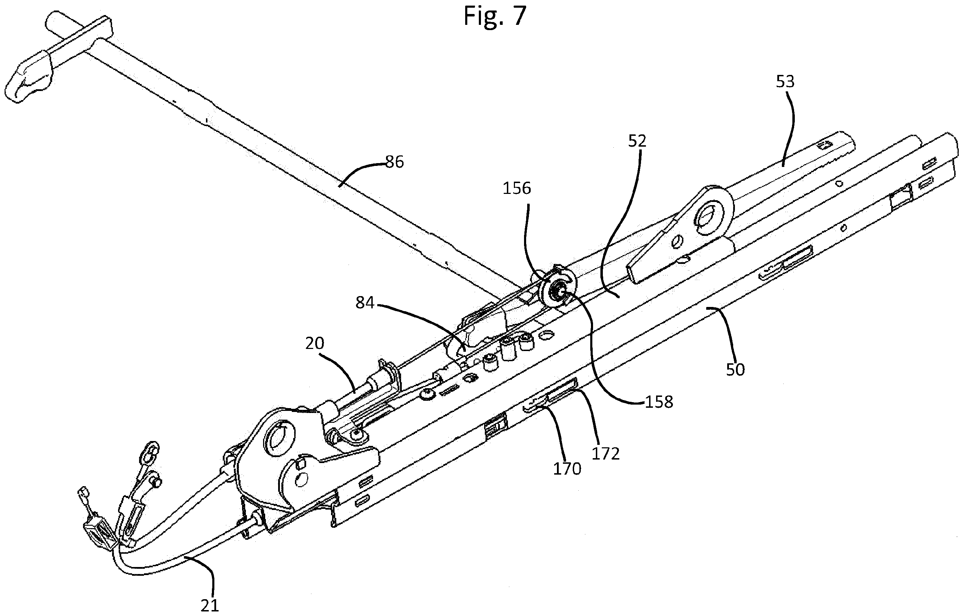

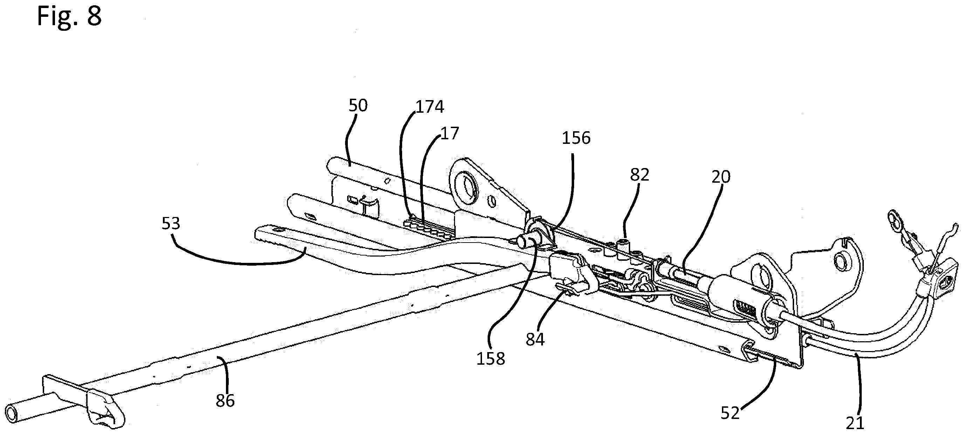

Die Figuren 1 bis 4 zeigen ein erstes Ausführungsbeispiel. Die Figuren 5 bis 10 zeigen eine verbesserte Ausführung dieses ersten Ausführungsbeispiels, das insgesamt drei Verbesserungen aufweist. Die Figuren 5 bis 10 werden nur insoweit besprochen, als sie sich vom ersten Ausführungsbeispiel unterscheiden. Jede einzelne der drei Verbesserungen ist unabhängig von den anderen Verbesserungen.

In bekannter Weise hat der Fahrzeugsitz zwei Schienenpaare mit jeweils einer Bodenschiene 50 und einer darin in Längsrichtung der Schienen verschiebbar geführten Sitzschiene 52. Letztere ist über einen vorderen Arm 54 und einen hinteren Arm 56 mit einem Sitzträger 58 gelenkverbunden. Am Sitzträger 58 ist auf einer Seite des Sitzes eine hintere Platte 60 befestigt. Der Sitzträger 58 ist weiterhin mit einer Lehne 62 gelenkverbunden. An der Lehne 62 ist ein Auslöser 64 angeordnet, er ist über einen Zug 66 mit einem Komfortnocken 68 verbunden, der schwenkbar am Rahmen der Lehne 62 angeordnet ist. In Figur 1 ist der Auslöser 64 passiv, der Komfortnocken 68 ist in Anlage an einer Klemmflanke eines Halteteils 70, das lehnenfest ist. Die Lehne 62 ist um eine Schwenkachse 72 schwenkbar. Es ist nur eine einzige Schwenkachse 72 für die Lehne 62 vorgesehen. Im Gegensatz zu einer technischen Lösung, bei der die normale Neigungseinstellung der Lehne 62 um eine erste Schwenkachse 72 und ein Vorklappen der Lehne 62 um eine zweite Schwenkachse 72 erfolgt, ist bei dem erfindungsgemäßen Sitz nur eine Schwenkachse 72 vorgesehen, beide Schwenkbewegungen erfolgen um diese Schwenkachse 72. Alternativ kann aber auch eine Lösung gewählt werden, bei der die normale Neigungseinstellung der Lehne 62 um eine andere Schwenkachse 72 als diejenige des Vorklappens der Lehne 62 erfolgt.

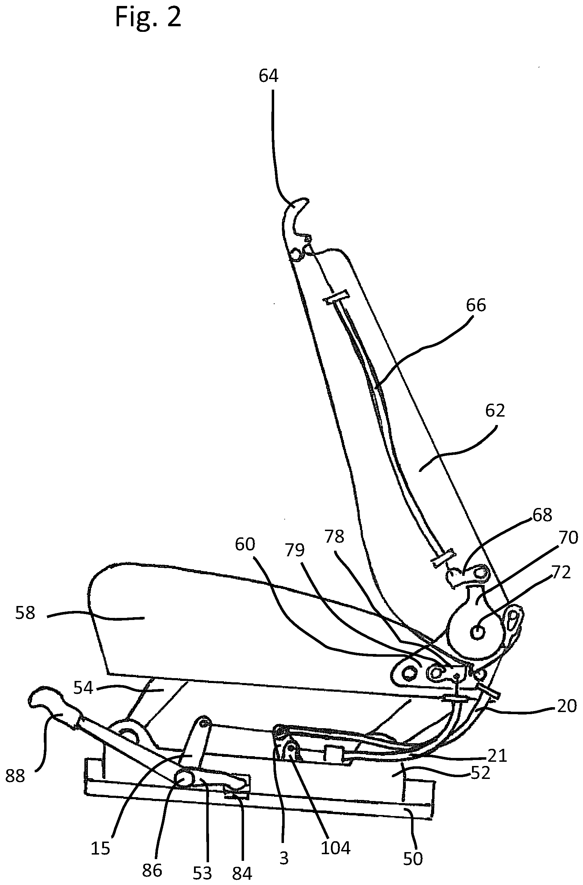

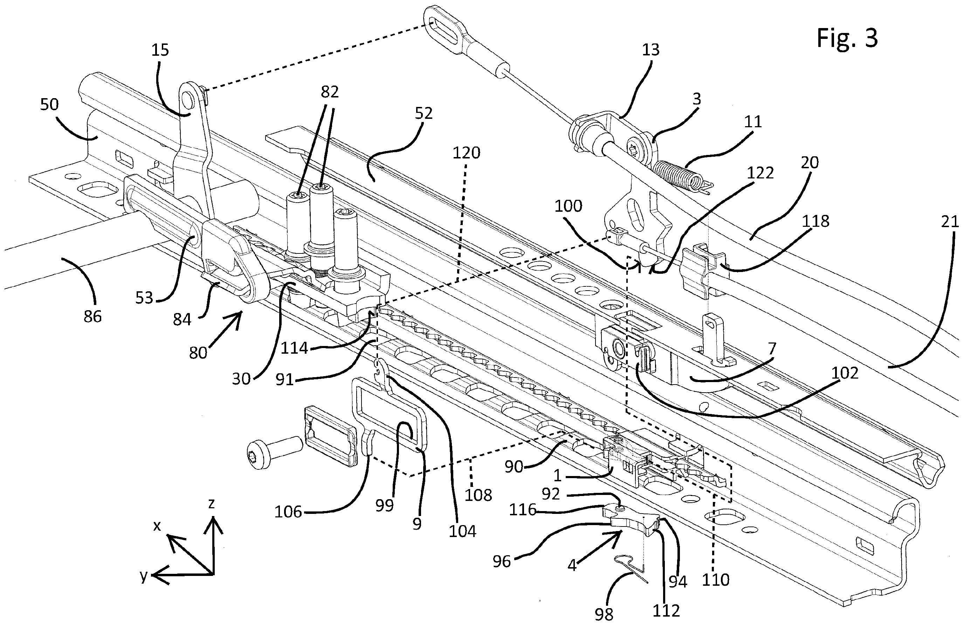

Für die Beschreibung wird ein rechtwinkliges x-y-z Koordinatensystem verwendet. Die x-Achse verläuft parallel zur Längsrichtung der Schienen 50, 52. Die y-Achse ragt in den Figuren 1 und 2 rechtwinklig aus der Oberfläche der Zeichnung und ist in Fig. 3 eingezeichnet.

In der Darstellung nach Figur 2 ist der Auslöser 64 betätigt, der Komfortnocken 68 ist aus seiner Normalposition geschwenkt und ist nun in einer Position, in der er nicht mehr mit dem Halteteil 70 kollidieren kann, wenn die Lehne 62 nach vorn geschwenkt wird. Der nach vorn geschwenkte Zustand ist in Figur 2 gezeigt.

An der Lehne 62 ist ein Anschlagelement 74 vorgesehen, dieses kann auch beispielsweise am Halteteil 70 ausgebildet sein. Es ist in der in Figur 1 gezeigten Normalposition in Kontakt mit einem Gegenanschlag 76, der an der Platte 60 ausgebildet ist. An der Platte 60 ist ein Haltenocken 78 schwenkbar angeordnet. Er ist so positioniert, dass er sich normalerweise unterhalb der Lehne 62, insbesondere des Anschlagelementes 74 befindet. Er ist durch eine erste Feder 79 in eine Drehrichtung entgegen dem Uhrzeigersinn belastet. Dadurch ist er in Anlage am Halteteil 70. Beim Vorwärtsklappen der Lehne 62 in die in Figur 2 gezeigte Lehnenposition kann er ggf. etwas nach unten gedrückt werden, falls dies notwendig ist, er bleibt in Kontakt mit dem Halteteil 70 und kommt in eine Position, in der er vor dem Anschlag 74 ist, dies ist in Figur 2 gezeigt. Dadurch sperrt er ein Zurückklappen der Lehne 62. Die erste Feder 79 ist beispielsweise als Schenkelfeder ausgeführt, umgreift die Achse des Haltenockens 78 und stützt sich einerseits am Haltenocken 78 und andererseits an der Platte 60 ab. Hierdurch wird die Seele des Komfort-Bowdenzugs 21 elastisch vorbelastet.

Der Haltenocken 78 ist über einen Komfort-Bowdenzug 21 verbunden, hierzu ist dessen Seele mit dem Haltenocken 78 verbunden, der Mantel des Bowdenzuges ist am Sitzträger 58 festgelegt. Weiterhin ist ein Entriegelungs-Bowdenzug 20 vorgesehen. Er hat eine Seele, die ein Langloch ausbildet, dieses umgreift einen Stift 81, der im Abstand von der Schwenkachse 72 an der Lehne 62 angeordnet ist. Der Entriegelungsbowdenzug 20 hat weiterhin einen Mantel, der am Sitzträger 58, hier konkret an der Platte 60, festgelegt ist. Wird die Lehne 62 aus der in Figur 1 gezeigten Normalposition in die vorgelagerte Position nach Figur 2 gekippt, kommt Zug 66 auf die Seele des Entriegelungsbowdenzugs 20, wie durch Vergleich der genannten beiden Figuren 1 und 2 ersichtlich ist. Hierdurch wird eine Verriegelung 80 der Längsverstellung betätigt.

Die Längsverstellung ist nach dem Stand der Technik aufgebaut. Sie hat mehrere, hier drei, unabhängig voneinander einrastbare und gemeinsam ausrastbare Sperrzähne 82, diese sind baugleich. Sie sind in einem Periodenmaß p in x-Richtung hintereinander angeordnet. Sie werden durch eine nicht dargestellte, aus dem Stand der Technik bekannte Stiftfeder individuell in Einrastrichtung vorbelastet. Die Einrastrichtung entspricht der negativen z-Richtung. Ein Ausrasten erfolgt über eine Entriegelungsklappe 84, die in bekannter Weise eine kammartige Struktur aufweist und gemeinsam die Sperrzähne 82 anheben kann. Die Entriegelungsklappe 84 wird über einen Lösehebel 53 betätigt, der um eine Traverse 86 schwenkbar ist. Die Schwenkbewegung wird über einen Mitnehmerhebel 15 eingeleitet, der an der Traverse 86 befestigt ist. Durch Ziehen der Seele des Entriegelungsbowdenzugs 20 wird über die Teile 15, 86, 53 und 84 die Arretierung der Verriegelung 80 aufgehoben. An der Traverse 86 ist ein Handgriff 88 befestigt, über den die normalerweise vorliegende Arretierung der Verriegelung 80 auch aufgehoben werden kann. Vergleicht man die Figuren 1 und 2, so erkennt man, dass durch die nach vorn geschwenkte Lehne 62 der Mitnehmerhebel 15 im Uhrzeigersinn geschwenkt wird, der Handgriff 88 wird in gleicher Richtung verschwenkt, er ist angehoben. Dadurch sind alle Sperrzähne 82 freigezogen.

Die Sperrzähne 82 durchgreifen ihnen zugeordnete Löcher in einer Stiftführung 30, die an der Sitzschiene 52 befestigt ist. Im konkreten Ausführungsbeispiel sind sie im Wesentlichen in einem kanalförmigen Hohlraum, den die beiden Schienen 50, 52 begrenzen, angeordnet.

In bekannter Weise hat die Bodenschiene 50 eine Rastenleiste 90, in der in periodischem Abstand in Längsrichtung der Schienen 50, 52 Rastöffnungen 91 angeordnet sind, in die die frontseitigen Enden der Sperrzähne 82 eingreifen können. Das Periodenmaß, also der Abstand zweier gleichartiger Rastöffnungen 91 in der Rastenleiste 90, ist r. Als Inkrement t wird der kleinste Abstand zweier benachbarter, unterschiedlicher Rastpositionen von Rastzähnen 82 in der Rastenleiste 90 bezeichnet. Es gilt t=r-p. Die Rastenleiste 90 ist mit der Bodenschiene 50 verbunden, vorzugsweise einstückig mit dieser. Weiterhin ist mit der Bodenschiene 50 eine Memoryleiste 17 verbunden. Sie läuft parallel zur Rastenleiste 90. Sie hat eine Vielzahl von Zähnen, die ähnlich den Zähnen eines Zahnrads ausgebildet sind, die Memoryleiste 17 kann als Zahnstange mit einer Normal-Verzahnung, z.B. Evolventenverzahnung, hergestellt sein. Andere Verzahnungsverfahren sind möglich. Die Zahnspitzen sind in einem Abstand in Längsrichtung der Schienen 50, 52 angeordnet, dieser Abstand definiert ein Periodenmaß m der Memoryleiste 17. Dieses Periodenmaß m ist so gewählt, dass es gleich dem Inkrement t ist. Die Zähne springen in positiver oder negativer y-Richtung vor. Die Memoryleiste 17 hat eine Länge, die der Länge der Rastenleiste 90 entspricht und von dieser sich max. 20% unterscheidet.

Der Memoryleiste 17 ist ein Schlitten 1 zugeordnet, er ist an der Memoryleiste 17 verschiebbar geführt. Hierzu übergreift ein oberer Teilbereich des Schlittens 1 die Memoryleiste 17 von oben, ein unterer Teilbereich der Memoryleiste 17 von unten. Die Memoryleiste 17 wird vom Schlitten 1 so vollständig umgriffen, dass dieser nicht quer zur Memoryleiste 17 abgezogen werden kann. Vorzugsweise weist der Schlitten 1 einen Kunststoffgleiter auf, der die Reibung zwischen Schlitten 1 und Memoryleiste 17 gering hält. Im Schlitten 1 ist um eine Achse 92 ein Rastelement 4 innerhalb eines vorgegebenen Winkelbereichs verschwenkbar. Das Rastelement 4 hat einen Rastzahn 94, der mit der Memoryleiste 17 zusammenwirkt. Er ist so gestaltet, dass er zwischen zwei Zähne der Memoryleiste 17 eingreifen kann. Dies erfolgt dann, wenn die Memory gesetzt ist. Normalerweise, in dem in Figur 1 gezeigten Zustand, ist dies nicht der Fall. Dann ist das Rastelement 4 in einer Schwenkposition, in der der Zahn 94 frei ist von der Memoryleiste 17.

Das Rastelement 4 hat weiterhin eine Nase 96, die sich außerhalb des Schlittens 1 befindet. Hierzu hat der Schlitten 1 eine Ausnehmung, die bewirkt, dass die Nase 96 frei zugänglich ist.

Im Schlitten 1 ist eine zweite Feder 98 untergebracht. Sie ist zwischen Rastelement 4 und Schlitten 1 angeordnet. Sie belastet das Rastelement 4 elastisch in eine Position, in der der Zahn 96 nicht im Eingriff mit der Memoryleiste 17 ist. Durch Druck auf die Nase 96 wird die Wirkung der zweiten Feder 98 unterstützt und schwenkt das Rastelement 4 in eine Eingriffsposition.

Im genannten kanalförmigen Hohlraum ist an der Sitzschiene 52 ein Lagerelement 7 angeordnet. Es hat einen Arm, der durch einen Durchlass in der Sitzschiene 52 hindurchragt, siehe Figur 3. Im Lagerelement 7 ist ein Auslösehebel 3 schwenkbar gelagert. Der Auslösehebel 3 wird durch eine Hauptfeder 11 in eine Endlage in negativer x-Richtung gezogen. Die Hauptfeder 11 ist zwischen einem Arm des Lagerelements 7 und dem Auslösehebel 3 angeordnet und als Zugfeder ausgebildet. Der Auslösehebel 3 ist ein zweiarmiger Hebel. An seinem einen, oberen Hebelarm ist ein Winkel 13 befestigt, an diesem ist der Mantel des Entriegelungsbowdenzugs 20 befestigt. Bei Betätigung des Entriegelungsbowdenzugs 20 durch Vorklappen der Lehne 62 und wie oben beschrieben, wird nicht nur der Mitnehmerhebel 15 geschwenkt und dadurch die Verriegelung 80 freigezogen, vielmehr wird auch der Auslösehebel 3 verschwenkt. Der Entriegelungsbowdenzug 20 übernimmt somit eine Doppelfunktion. Er bewirkt die Entriegelung der Längsverstellung und er bewirkt ein Verschwenken des Auslösehebels 3. Bei Betätigung des Entriegelungsbowdenzugs 20 ändert sich der auf einer Luftlinie gemessene Abstand der beiden Enden des Mantels, dies vorzugsweise um mindestens 2 % der Mantellänge. Um beide Funktionen realisieren zu können, ist zumindest ein Anschlag für die primär erfolgende Funktion notwendig. Wird das Verschwenken des Mitnehmerhebels 15 als primäre Funktion vorgesehen, so wird zunächst dieser bis zu einer Anschlagposition verschwenkt, anschließend erfolgt das Verschwenken des Auslösehebels 3. Ist alternativ das Verschwenken des Auslösehebels 3 als primäre Funktion gewählt, so muss dem Auslösehebel 3 ein Anschlag zugeordnet sein und erfolgt die Bewegung des Mitnehmerhebels 15, sobald der Anschlag erreicht ist. Es wird bevorzugt, das Verschwenken des Auslösehebels 3 als primäre Funktion einzusetzen. Günstig ist es, für beide Bewegungen jeweils einen Anschlag, der der verschwenkten Position zugeordnet ist, vorzusehen. Die primäre Funktion und die sekundäre Funktion werden durch Auswahl der jeweiligen Federn, also der Feder 11 und einer nicht dargestellten, die Entriegelungsklappe 84 und/oder die Traverse 86 belastenden Feder erhalten.

Der Auslösehebel 3 hat an seinem anderen Arm eine Flanke A 100. Der Auslösehebel 3 durchgreift ein Loch der Sitzschiene 52, siehe die Figuren 1 und 2. Zu mehr als 50 % befindet sich der Auslösehebel 3 im kanalförmigen Hohlraum. Am Körper des Lagerelements 7 ist ein Führungselement 102 angeordnet. Es befindet sich im kanalförmigen Hohlraum. Es wird von einem Schieber 9 umgriffen, der am Führungselement 102 in Längsrichtung der Schienen 50, 52 verschiebbar ist. Das Führungselement 102 hat in dieser Längsrichtung eine Länge, die kürzer ist, insbesondere 6 bis 8 mm, vorzugsweise 4 bis 10 mm kürzer ist als die entsprechende Innenabmessung eines Fensters 99 des Schiebers 9. Um die Reibung zwischen Führungselement 102 und Fenster 99 des Schiebers 9 zu verringern, sind am Führungselement 102 oben und unten Rollen angeordnet, die in Kontakt mit den in x-Richtung verlaufenden Flanken des Fensters 99 übernehmen und die Reibung verringern. Der Schieber 9 wird durch die erste Feder 79 in seine Grundstellung vorbelastet.

Am Schieber 9 springt nach oben ein Betätigungsarm 104 vor. Der Betätigungsarm 104 durchgreift das Loch der Sitzschiene 52, siehe die Figuren 1 und 2. Das schienenseitige Ende der Seele des Komfort-Bowdenzugs 21 greift am Betätigungsarm 104 an. Verwiesen wird auf die gestrichelte Linie 120.

Am Schieber 9 springt nach unten eine Betätigungsnase 106 vor. Diese kommt, wie durch die gestrichelte Linie 108 dargestellt ist, in Kontakt mit der Nase 96. Eine weitere gestrichelte Linie 110 lässt erkennen, dass das Rastelement 4, genauer gesagt eine Flanke B 112 des Rastelements 4, in Kontakt mit der Flanke A 100 kommt.

An der Stiftführung 30 befindet sich eine Kontur C 114, die im gezeigten Ausführungsbeispiel konkav ausgeführt ist. Sie wirkt mit einer Kontaktfläche 116 des Rastelements 4 zusammen. Im konkreten Ausführungsbeispiel ist diese Kontaktfläche 116 zentrisch zu der Achse 92. Ebenso ist die Kontur C 114, wenn sie in Kontakt mit der Kontaktfläche 116 ist, zentrisch zu dieser Achse 92. Insgesamt sind Kontur C 114 und die Kontaktfläche 116 so ausgeführt, dass auch ein schräger Kontakt, also ein Kontakt, der um wenige Winkelgrade abweicht von der Längsrichtung der Schienen 50, 52, nicht dazu führt, dass der Rastzahn 94 aufgrund des Kontaktes oder eines entsprechenden Impulses aus einer Einraststellung freigeschwenkt wird. Anders ausgedrückt soll der Kontakt so erfolgen, dass die Hauptrichtung der Kraft möglichst durch die Achse 92 verläuft, jedenfalls nahe dieser Achse 92 ist. Durch die beschriebene konkave Ausbildung der Kontur C 114 wird eine wichtige Voraussetzung für diese Art des Kontakts geschaffen.

Der Mantel des Komfortbowdenzugs 21 ist unten in einem Anschlusselement 118 festgelegt, dieses wird auf dem genannten Arm des Lagerelements 7 gehalten. Das Anschlusselement 118 für das schienenseitige Ende des Mantels des Komfort-Bowdenzugs 21 wird durch das Federende der Feder 11 gesichert.

Da sich in der gezeigten Ausführung die Memoryleiste 17 unterhalb der Stiftführung 30 befindet, ist die Kontur C 114 an einem separaten Bauteil ausgebildet, das sich unterhalb der Stiftführung 30 befindet und mit dieser fest verbunden ist. Die Kontur C 114 befindet sich im gleichen Abstand unterhalb der Stiftführung 30 wie die Memoryleiste 17.

Im Folgenden wird die Grundstellung beschrieben: Die Verriegelung 80 ist im Eingriff, mindestens zwei Sperrzähne 82 sind eingetaucht in Rastöffnungen 91 der Rastenleiste 90. Das Rastelement 4 befindet sich in unmittelbarer Nähe der Kontur C 114, der Abstand beträgt beispielsweise 0,1 bis 0,2 mm. Der Auslösehebel 3 ist durch die Hauptfeder 11 nach hinten, in Richtung Lehne 62, gezogen. Der Entriegelungsbowdenzug 20 ist entspannt. Der Komfort-Bowdenzug 21 befindet sich unten in seiner größten Längung. Der Haltenocken 78 ist geöffnet, er wird nicht benötigt. Die Lehne 62 ist durch den Komfortnocken 68 und Anlage am Gegenanschlag 76 verriegelt. Das Fenster 99 des Schiebers 9 ist links frei, links ist die x-Richtung. Anders ausgedrückt befindet sich das Führungselement 102 am hinteren Ende des Fensters 99. Die Betätigungsnase 106 des Schiebers 9 ist in Kontakt mit der Nase 96 des Rastelements 4. Die Flanke A 100 des Auslösehebels 3 ist in Kontakt mit der Flanke B 112. Aufgrund der Wirkung der Feder 11 auf den Auslösehebel 3 greift die Flanke A 100 vor die Flanke B 112 und schiebt die Flanke B 112 nach außen, dadurch ist das Rastelement 4 entriegelt und hat keinen Kontakt mit der Memoryleiste 17.

Eine normale Betätigung der Längsverstellung läuft wie folgt ab: Wenn über den Handgriff 88 die Entriegelungsklappe 84 betätigt wird, werden alle Sperrzähne 82 angehoben. Die Sitzschiene 52 kann nun gegenüber der Bodenschiene 50 verschoben werden, es erfolgt eine Verschiebung in Schienenlängsrichtung. Der Easy Entry Mechanismus bleibt in Grundstellung. Der Schlitten 1 wird über die Flanke A 100 beim Verstellen mit nach vorn (in der Zeichnung nach links) gezogen, wenn nach vorn verschoben wird. Wenn die Sitzschiene 52 nach hinten verschoben wird, wird der Schlitten 1 über die Kontur C 114, die in Kontakt mit dem Rastelement 4 ist, zurückgeschoben. Bei einer normalen Verstellung der Schienen gegeneinander ist der Schlitten 1 an die Stiftführung 30 angekoppelt, bewegt sich also mit dieser.

Die Feder 11 hat Vorrang vor der zweiten Feder 98, die das Rastelement 4 belastet.

Im Folgenden wird eine Verlagerung des Sitzes nach vorn ausgehend von der Normalposition beschrieben: Durch Vorklappen der Lehne 62 wird der Entriegelungsbowdenzug 20 gespannt und zieht über den Mitnehmerhebel 15 usw. die Entriegelungsklappe 84 die Sperrzähne 82 frei. Zudem und vorzugsweise zuvor wird der Auslösehebel 3 betätigt, die Flanke A 100 geht hoch. Wenn die Flanke A 100 angehoben ist, kann die Schenkelfeder, die das Rastelement 4 belastet, das Rastelement 4 im Schlitten 1 verschwenken, dadurch kommt der Rastzahn 94 in Eingriff in die Memoryleiste 17. Dadurch ist der Schlitten 1 von der Stiftführung 30 abgekoppelt und ist der Memoryleiste 17 durch Formschluss zugeordnet. Der Formschluss ist quer in Richtung der Längsverstellung.

Beim Vorklappen der Lehne 62 in die in Figur 2 geschwenkte Position schwenkt der Haltenocken 78 nach oben, er kommt vor den Anschlag 74. Der Komfort-Bowdenzug 21 wird dadurch zurückgezogen, er geht in die entspannte Stellung. Er ist also nicht mehr gezogen. Der Schieber 9 bewegt sich nach hinten, er kommt in Kontakt mit der linken, vorderen Seite des Fensters 99 des Schiebers 9. Durch die Wechselwirkung von Haltenocken 78 und Anschlag 74 ist die Lehne 62 gegen ein Rückklappen gesperrt, sie bleibt in der in Figur 2 gezeigten Position. Die Lehne 62 muss erst soweit nach vorn geklappt werden, dass der Haltenocken 78 vor den Anschlag 74 geschwenkt wird, erst danach kann über die vorgeklappte Lehne 62, die insoweit einen Betätigungsarm bildet, der Sitz in der Längsverstellung nach vorn geschoben werden. Die Kraft, die ein Nutzer ausüben muss, um die Lehne 62 nach vorn zu klappen, ist deutlich kleiner als die Kraft für ein Vorschieben des Sitzes in der Längsführung, der Unterschied liegt mindestens bei einem Faktor zwei.

Wird nun der Sitz über die gesperrte Lehne 62 wieder nach hinten geschoben, werden also die Sitzschienen 52 wieder nach hinten gegenüber den Bodenschienen 50 verlagert, laufen folgende Vorgänge ab: Kurz vor Erreichen der zuvor eingestellten Position der Längsverstellung, der sogenannten Memoryposition, kontaktiert die Betätigungsnase 106 des Schiebers 9 die Nase 96 des Rastelements 4. Der Schieber 9 macht nun die weitere Bewegung der Sitzschiene 52 gegenüber der Bodenschiene 50 nicht mehr mit. Er bewegt sich also nicht mehr relativ zum Schlitten 1. Das Lagerelement 7 bewegt sich weiter mit der Sitzschiene 52. Nach dem Kontakt zwischen Betätigungsnase 106 und Nase 96 kann die Sitzschiene 52 zusammen mit dem Lagerelement 7 noch ca. 6 bis 8 mm nach hinten verschoben werden. Um den entsprechenden Betrag wird der vorgespannte Komfort-Bowdenzug 21 gezogen. Er ist durch die erste Feder 79 vorgespannt. Es erfolgt eine Schwenkbewegung des Haltenockens 78 nach unten. Dadurch kommt der Haltenocken 78 vom Anschlagelement 74 frei. Die Lehne 62 wird freigegeben. Sie kann wieder nach oben geklappt werden. Am Ende der Rückbewegung des Sitzes in den Schienen 50, 52 schlägt die Kontur C 114 an das Rastelement 4 an und stoppt über den in der Memoryleiste 17 eingegriffenen Rastzahn 94 den Sitz. Dadurch wird die weitere Verschiebung nach hinten blockiert.

Sobald die Lehne 62 wieder in der Normalposition (siehe Figur 1) ist, wird der Entriegelungsbowdenzug 20 entspannt. Die Sperrzähne 82 können nun wieder einfallen. Der Auslösehebel 3 wird über die Feder 11 bewegt, seine Flanke A 100 kommt dadurch hinter die Flanke B 112 des Rastelements 4. Dadurch wird das Rastelement 4 verschwenkt, der Rastzahn 94 kommt von der Memoryleiste 17 frei.

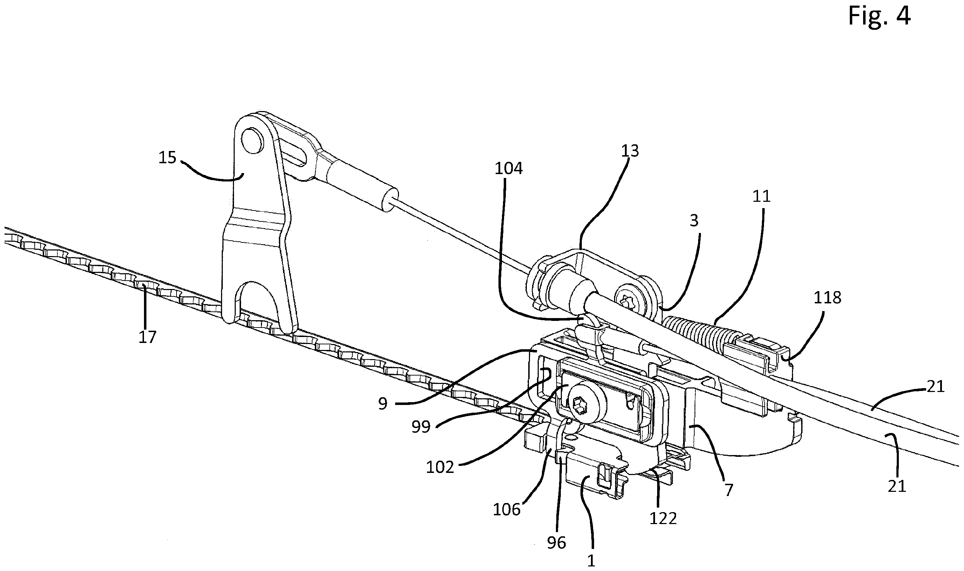

Ein besonderer Vorteil der erfindungsgemäßen Anordnung liegt darin, dass sie zu einer Baueinheit zusammengefasst werden kann, siehe Figur 4, die als vorgefertigte Einheit in den kanalförmigen Hohlraum der Schienen 50, 52 eingebaut werden kann. Ein besonderer Vorteil liegt auch in der horizontalen Bewegung des Rastelements 4. Ein besonderer Vorteil liegt weiter darin, dass die exakte Memoryposition wiedergefunden wird, dies unter allen Umständen. Im Stand der Technik kommt es vor, dass nicht die exakte Memoryposition, sondern eine Position etwas davor oder etwas dahinter wiedergefunden wird.

Figur 4 zeigt die vormontierte Baueinheit, die an die Sitzschiene 52 angebaut wird. Der Mitnehmerhebel 15 wird mit der Traverse 86 verbunden. In einer anderen Ausführung ist diese Verbindung bereits realisiert und gehört der Mitnehmerhebel 15 nicht zur Baueinheit. Die Memoryleiste 17 und der Schlitten 1 gehören nicht zur Baueinheit. Die Memoryleiste 17 wird mit der Bodenschiene 50 verbunden, vorzugsweise von dieser unmittelbar ausgebildet. Der Schlitten 1 befindet sich auf der Memoryleiste 17, wenn diese eingebaut wird. In einer Alternative wird er in Längsrichtung auf die Memoryleiste 17 aufgeschoben. Es ist auch möglich, die Memoryleiste 17 und den Schlitten 1 zur Baueinheit zuzufügen, da wird nachträglich die Memoryleiste 17 mit der Bodenschiene 50 verbunden.

Die Teile Auslösehebel 3, Schieber 9 und Lagerelement 7 bilden eine Baueinheit, die in den genannten kanalförmigen Hohlraum eingebaut wird. Konkret wird sie mit der Sitzschiene 52 verbunden.

Eine Flanke D 122 des Auslösehebels 3, die sich an die Flanke A 100 anschließt, ist gekrümmt und so geformt, dass der Auslösehebel 3 beim Verfahren nach hinten gegen die Wirkung der Hauptfeder 11 hochgedrückt wird und über den gesamten Schlitten 1 rutschen kann. Dadurch kann die Flanke A 100 des Auslösehebels 3 wieder hinter die Flanke B 112 des Rastelements 4 gebracht werden, wodurch der Schlitten 1 wieder an die Stiftführung 30 angekoppelt ist.

Beim Komfort-Bowdenzug 21 arbeitet nur die Seele. Das Langloch des Entriegelungs-Bowdenzugs 20 ist so lang gewählt, dass bei einer normalen Winkelverstellung der Lehne 62 in der Gebrauchsstellung kein Zug auf die Seele des Komfort-Bowdenzugs 21 ausgeübt wird. Anders ausgedrückt kommt der Stift 81 bei einer normalen Winkelverstellung der Lehne 62 nicht in Kontakt mit den Enden des Langlochs.

Im Folgenden wird die verbesserte Ausführung des ersten Beispiels unter Bezugnahme auf die Figuren 5 bis 10 beschrieben.

Wenn ausgehend von der Position gemäß Fig. 2 bei der Sitzverstellung die Memoryposition wieder erreicht wird, zieht der Schieber 9 den Komfort-Bowdenzug 21, dadurch wird die Lehne 62 freigegeben. Anschließend kann die Lehne 62 wieder aufgerichtet werden. Der Weg am Schieber 9 entspricht 1:1 dem Weg am Komfort-Bowdenzug 21. Dies hat allerdings einen gewissen Nachteil. Wird der Sitz mit einer geringen Geschwindigkeit zurückgeschoben, macht sich ein spürbarer Anstieg der Verschiebekraft des Sitzes bemerkbar. Der Benutzer merkt ab dem Zeitpunkt, an dem der Funktionsablauf für die Lehnenfreigabe beginnt, einen deutlichen Anstieg der Verschiebekraft.

Um den Anstieg der Verschiebekraft für den Benutzer weniger spürbar werden zu lassen, wurde in einer ersten Verbesserung das Prinzip der losen Rolle eingebracht. Dadurch wurde eine Übersetzung 1:2 erreicht. Die Verschiebekraft beim Funktionsablauf Lehnenfreigabe wurde so halbiert. Konkret ist folgendes gegenüber dem ersten Ausführungsbeispiel geändert: Das untere Ende der Seele des Komfort-Bowdenzuges 21 ist nun nicht direkt mit dem Schieber 9 verbunden, vielmehr ist ein Übersetzungsmittel zwischengeschaltet. Es weist eine Zuglasche 150 und eine Komfortrolle 152 auf. Die Komfortrolle 152 ist in der Zuglasche 150 frei drehbar. Weiterhin weist das Übersetzungsmittel ein kurzes Seil 154 auf, das die Komfortrolle um etwa 180° umschlingt. Die Seele des Komfort-Bowdenzuges 21 greift an der Zuglasche 150 an, sie ist dort eingehakt. Das kurze Seil 154 greift mit einem ersten Ende am Schieber 9 an. Das andere Ende des kurzen Seils 154 ist mit der Sitzschiene 52 verbunden. Die Drehachse der Komfortrolle 152 verläuft parallel zur y-Richtung.

Die Hauptfeder 11 bewirkt ein Drehmoment auf den Auslösehebel 3, der drehbar gelagert ist. Dieses Drehmoment wirkt als Kontaktkraft auf das Rastelement 4 und drückt dieses aus der Verrastung mit der Memoryleiste 17. Dabei muss die Kontaktkraft größer sein, als die Kräfte, die über den Schieber 9 auf das Rastelement 4 wirken. Durch den Einbau der losen Kontaktrolle 152 wird die Kraft der Hauptfeder 11 bzw. das durch sie auf den Auslösehebel 3 bewirkte Drehmoment halbiert. Weiterhin befindet sich die Hauptfeder 11 nun im kanalförmigen Hohlraum, der von den Schienen 50, 52 begrenzt ist. Dies führt zu einem geringeren Bauraum und zu einer geschützteren Anordnung der Hauptfeder 11.

Beim oben beschriebenen ersten Ausführungsbeispiel entriegelt der Entriegelungs-Bowdenzug 20 bei einem Vorklappen der Lehne 62 die Verriegelung der Schienenlängsverstellung, gleichzeitig wird der Auslösehebel 3 nach vorn geschwenkt, dadurch kommt das Rastelement 4 in Eingriff mit der Memoryleiste 17. Diese Doppelfunktion ist dadurch möglich, dass zum einen das Ende der Seele des Entriegelungs-Bowdenzugs 20 am Mitnehmerhebel 15 angreift, der die Entriegelung der Schienenlängsverstellung ermöglicht, und zum anderen der Mantel des Entriegelungs-Bowdenzugs am Auslösehebel 3 angeordnet ist, wodurch eine Schwenkbewegung des Auslösehebels 3 ermöglicht wird.

Dieser Aufbau hat allerdings den Nachteil, dass der Mitnehmerhebel 15 eine relativ große Hebellänge aufweisen muss. Dadurch wird ein erhöhter Bauraumbedarf erforderlich. Auch durch den am Auslösehebel 3 angeordneten Mantel des Entriegelungs-Bowdenzugs 20 wird Bauraum benötigt. Um den Bauraum zu verringern und um den Auslösehebel 3 verkleinern zu können, wurde auch hier das Prinzip einer losen Rolle eingebracht. In der zweiten Verbesserung ist eine Entriegelungsrolle 156 vorgesehen, die auf einem Bolzen 158 drehbar gelagert ist. Der Mitnehmerhebel 15 kann dann entfallen. Der Mantel des Entriegelungs-Bowdenzugs 20 ist an der Sitzschiene 52 befestigt, dies erfolgt über ein geeignetes Halteblech. Die Seele des Entriegelungs-Bowdenzugs 20 wird um die Entriegelungsrolle 156 herumgeführt, das Ende der Seele ist über ein Halteblech mit dem Auslösehebel 3 verbunden. Das Halteblech wird nach Einbringen des Memorysystems in den kanalförmigen Hohlraum der Schienen 50, 52 über eine Gewindebuchse mit dem Auslösehebel 3 verschraubt. Der Bolzen 158 ist mit der Traverse 86 drehfest verbunden. Die Drehachse der Entriegelungsrolle 156 läuft parallel zur y-Richtung.

Eine dritte Verbesserung betrifft die nachträgliche Montage der Memoryleiste 17. Nach dem ersten Ausführungsbeispiel erfolgt die Verbindung von Memoryleiste 17 und Bodenschiene 50 vor dem Zusammenbau der Schienen 50, 52 zu einem Schienenpaar. Um nur solche Längsführungen mit einer Memoryleiste 17 ausstatten zu können, die eine Memoryeinrichtung haben, wird bei der dritten Verbesserung die Memoryleiste 17 nachträglich in ein Schienenpaar eingebracht und mit der Bodenschiene 50 verbunden, nachdem die Schienen 50, 52 lackiert wurden, zu einem Schienenpaar zusammengefügt wurden und ein Einfahrvorgang durchgeführt wurde.

Dabei wird die Memoryleiste 17 mit der Bodenschiene 50 verbunden, ohne das schon lackierte Schienenpaar durch Schweißen oder ähnliches zu beschädigen.

Die Memoryleiste 17 hat zwei Haken 170, die im Wesentlichen L-förmig ausgeführt sind. Sie springen von der eigentlichen Memoryleiste 17 quer ab und stehen in gleicher Richtung. Sie befinden sich den Enden der Memoryleiste 17 näher als der Mitte der Memoryleiste. Sie zeigen beide in dieselbe Richtung, beispielsweise die positive x-Richtung. Die Haken weisen jeweils eine Klemmschräge 176 auf. Es handelt sich um eine geringe Schräge an ihrer dem Körper der Memoryleiste 17 zugewandten Fläche, beispielsweise eine 2°-Schräge. Dadurch wird eine Klemmwirkung erzielt. Die Bodenschiene 50 hat den Haken 170 angepasste Hakenöffnungen 172. Diese sind so bemessen, dass die Haken 170 bei der Montage in y-Richtung durch die Hakenöffnungen 172 gesteckt werden können.

### Die Montage läuft wie folgt ab:

Die Memoryleiste 17 wird in Längsrichtung der Schienen 50, 52 von hinten oder vorn in den kanalförmigen Hohlraum eingebracht. Die Memoryleiste 17 wird so positioniert, dass die Haken 170 mit den Hakenöffnungen 172 fluchten. Nun werden die Haken 170 durch die Hakenöffnungen 172 gesteckt. Dann wird die Memoryleiste 17 in Längsrichtung der Schienen 50, 52 so bewegt, dass die Haken 170 an der Außenfläche der Bodenschiene 50 entlang rutschen, bis der Rand der Hakenöffnung 172 in den Haken 170 eingegriffen hat. Für diesen Montageschritt ist eine gewisse Kraft erforderlich. Durch die Klemmschrägen 176 wird eine zunehmende Verklemmung erreicht. Am in Bewegungsrichtung hinteren Ende der Memoryleiste 17 und außerhalb des Bewegungsbereichs des Schlittens 1 wird eine kleine Verformung 174 in die Bodenschiene 50 eingebracht, dadurch wird die Memoryleiste 17 mechanisch fixiert.

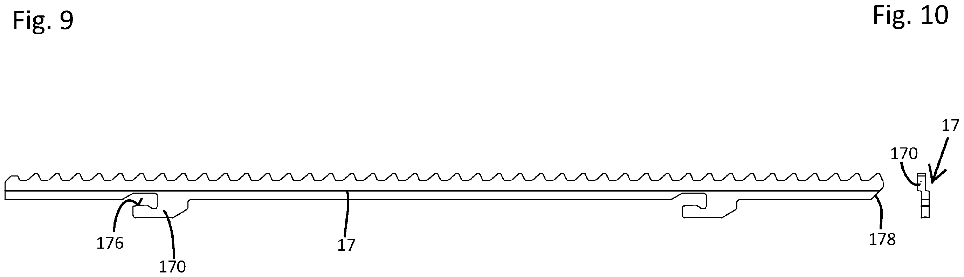

Wie Fig. 9 zeigt, weist die Memoryleiste 17 eine Fase 178 an dem Ende auf, das bei Einführung in den kanalförmigen Hohlraum hinten ist. Sie dient der Fixierung der Memoryleiste 17 in x-Richtung. Die Fase 178 befindet sich bei montierter Memoryleiste 17 in unmittelbarer Nähe, vorzugsweise in Kontakt mit der Verformung 174.

Für die nachträglich montierbare Memoryleiste 17 behält sich die Anmelderin vor, eine separate Anmeldung einzureichen und durchzuführen. Dies kann beispielsweise im Wege einer Teilanmeldung erfolgen. Die dritte Verbesserung ist unabhängig von den anderen Verbesserungen und auch unabhängig von den meisten Merkmalen des Anspruchs 1, jedenfalls von den Merkmalen des Kennzeichens des Anspruchs 1.

## Patentansprüche

1. Fahrzeugsitz
- mit einem Untergestell, das mindestens eine Bodenschiene (50) und eine darin geführte Sitzschiene (52) aufweist, die Schienen (50, 52) verlaufen in einer Längsrichtung,
- mit einer Verriegelung (80) für eine Längsverstellung dieser Schienen gegeneinander in der Längsrichtung, die Verriegelung (80) weist
a) mehrere, unabhängig voneinander einrastbare und gemeinsam ausrastbare Sperrzähne (82), die baugleich und in einem Periodenmaß p in der Längsrichtung hintereinander angeordnet sind und
b) eine Rastenleiste (90) mit in der Längsrichtung der Schienen hintereinander in einem Periodenmaß r angeordneten Rastöffnungen (91) auf, die mit der Bodenschiene (50) verbunden ist,
- mit einer Memoryeinrichtung,
c) die eine Memoryleiste (17) aufweist, welche in einem Periodenmaß m in Längsrichtung der Schienen hintereinander angeordnete Zähne aufweist,
d) die einen Auslösehebel (3) aufweist, der an der Sitzschiene (52) schwenkbar angeordnet ist und eine Flanke A (100) hat,
e) die einen Schieber (9) aufweist, der in Längsrichtung der Schienen an einem Führungselement (102), das mit der Sitzschiene (52) verbunden ist, verschiebbar geführt ist und
f) die einen Schlitten (1) aufweist, der ein an der Memoryleiste (17) in Längsrichtung der Schienen geführtes Gehäuse aufweist, in welchem ein Rastelement (4) schwenkbar gelagert ist, das einen mit den Zähnen der Memoryleiste (17) zusammenwirkenden Rastzahn (94) aufweist,
- mit einem Sitzträger (58), der mit dem Untergestell verbunden ist und an dem ein Haltenocken (78) schwenkbar gelagert ist,
- mit einer Lehne (62),
g) die um eine Schwenkachse (72) schwenkbar mit dem Sitzträger (58) verbunden ist,
h) die einen Auslöser (64) aufweist, über den ein Vorklappen der Lehne (62) um die Schwenkachse (72)ausgelöst werden kann,
i) die einen Anschlag aufweist, der mit dem Haltenocken (78) zusammenwirkt und die Lehne (62) in einer vorgeklappten Position hält, und
j) die einen Stift (81) aufweist,
- mit einem Entriegelungs-Bowdenzug (20), dessen Seele an einem oberen Ende mit dem Stift (81) und an einem unteren Ende mit einer Entriegelungsklappe (84) der Verriegelung (80) verbunden ist und dessen Mantel an einem oberen Ende am Sitzträger (58) angeordnet ist, und
- mit einem Komfort-Bowdenzug (21), dessen Seele an einem oberen Ende mit dem Haltenocken (78) und an einem unteren Ende mit dem Schieber (9) verbunden ist, und dessen Mantel an einem oberen Ende mit dem Sitzträger (58) und an einem unteren Ende mit der Sitzschiene (52) verbunden ist,
wobei das Periodenmaß m der Memoryleiste (17) gleich dem Abstand zweier unmittelbar benachbarter Raststellungen der Sperrzähne (82) und der Rastenleiste (90) ist; und die Bauteile Auslösehebel (3), Schieber (9) und Lagerelement (7) eine vormontierbare Baueinheit bilden, die in die Sitzschiene (52) eingebaut wird.

2. Fahrzeugsitz nach Anspruch 1, **dadurch gekennzeichnet, dass** der Schieber (9) einen Betätigungsarm (104) aufweist, der durch ein Loch in der Sitzschiene (52) ragt.

3. Fahrzeugsitz nach einem der vorangegangenen Ansprüche, **dadurch gekennzeichnet, dass** der Schieber (9) eine Betätigungsnase (106) aufweist, dass das Rastelement (4) eine Nase (96) aufweist, und dass die Betätigungsnase (106) und die Nase (96) in Kontakt miteinander kommen.

4. Fahrzeugsitz nach einem der vorangegangenen Ansprüche, **dadurch gekennzeichnet, dass** ein Lagerelement (7) vorgesehen ist, das an der Sitzschiene (52) festgelegt ist und das einen Aufnahmeraum ausbildet, in dem der Auslösehebel (3) untergebracht ist.

5. Fahrzeugsitz nach einem der vorangegangenen Ansprüche, **dadurch gekennzeichnet, dass** der Schieber (9) ein Fenster (99) aufweist, dass das Führungselement (102) in dieses Fenster (99) eingreift und dass das Fenster (99) in Längsrichtung der Schienen ein Übermaß von mindestens vier Millimeter gegenüber dem Längenmaß des Führungselementes (102) aufweist.

6. Fahrzeugsitz nach einem der vorangegangenen Ansprüche, **dadurch gekennzeichnet, dass** ein Lagerelement (7) vorgesehen ist, an dem der Auslösehebel (3) schwenkbar gelagert ist und an dem das Führungselement (102) vorgesehen ist.

7. Fahrzeugsitz nach Anspruch 1, **dadurch gekennzeichnet, dass** zusätzlich noch mindestens eines der folgenden Merkmale erfüllt ist:
- die Bauteile Memoryleiste (17) und Schlitten (1) befinden sich in einem von den Schienen begrenzten kanalförmigen Hohlraum,
- die Zähne der Memoryleiste (17) verlaufen in einer x-y-Ebene,
- der Haltenocken (78) ist durch ein erste Feder in Einrastrichtung mit dem Anschlag vorbelastet, wodurch die Seele des Komfort-Bowdenzugs (21) elastisch vorbelastet ist,
- der Mantel des Entriegelungs-Bowdenzugs (20) hat im Normalzustand einen ersten Verlauf, und im betätigten Zustand dieses Entriegelungs-Bowdenzugs (20) einen zweiten Verlauf, die beiden Verläufe sind unterschiedlich, der lichte Abstand zwischen den beiden Enden des Mantels unterscheidet sich um mindestens 4 mm, vorzugsweise um mindestens 5 mm,
- das untere Ende des Mantel des Entriegelungs-Bowdenzugs (20) ist an dem Auslösehebel (3) angeordnet, und
- das Rastelement (4) führt eine Verriegelungsbewegung in der x-y-Ebene aus.

8. Fahrzeugsitz nach Anspruch 1, **dadurch gekennzeichnet, dass** das Periodenmaß m der Memoryleiste (17) gleich die Differenz von Periodenmaß r der Rastöffnungen (91) und Periodenmaß p der Sperrzähne ist.

9. Fahrzeugsitz nach einem der vorangegangenen Ansprüche, **dadurch gekennzeichnet, dass** eine mit der Sitzschiene (52) verbundene Stiftführung (30) für die Sperrzähne vorgesehen ist.

10. Fahrzeugsitz nach einem der vorangegangenen Ansprüche, **dadurch gekennzeichnet, dass** eine Hauptfeder (11) vorgesehen ist, die am Auslösehebel (3) angreift und diesen in eine Endlage elastisch vorbelastet, und dass die Hauptfeder (11) in dem von der Bodenschiene (50) und der Sitzschiene (52) begrenzten, kanalförmigen Hohlraum angeordnet ist.

11. Fahrzeugsitz nach einem der vorangegangenen Ansprüche, **dadurch gekennzeichnet, dass** zwischen dem unteren Ende der Seele des Komfort-Bowdenzugs (21) und dem Schieber (9) eine Zuglasche (150), eine darin drehbar gelagerte Komfortrolle (152) und ein kurzes Seil (154) angeordnet sind, wobei die Seele an der Zuglasche (150) angreift, das kurze Seil (154) die Komfortrolle (152) umgreift und ein Ende des kurzen Seils (154) am Schieber (9) angreift, das andere Ende an der Sitzschiene (52) befestigt ist.

12. Fahrzeugsitz nach einem der vorangegangenen Ansprüche, **dadurch gekennzeichnet, dass** zwischen dem unteren Ende der Seele des Entriegelungs-Bowdenzugs (20) und der Entriegelungsklappe (84) eine Entriegelungsrolle (156) vorgesehen ist, die auf einem Bolzen (158) drehbar gelagert ist, der mit einer Traverse (86) verbunden ist, und dass das untere Ende der Seele um die Entriegelungsrolle (156) herumgeführt ist und an der Sitzschiene (52) festgelegt ist.

13. Fahrzeugsitz nach einem der vorangegangenen Ansprüche, **dadurch gekennzeichnet, dass** die Memoryleiste (17) Haken (170) aufweist, und dass die Bodenschiene (50) diesen Haken (170) angepasste Hakenöffnungen (172) aufweist.

14. Verfahren zum Anbringen einer Memoryleiste (17) an einer Bodenschiene (50) eines Fahrzeugsitzes
- mit einem Untergestell, das mindestens die Bodenschiene (50) und eine darin geführte Sitzschiene (52) aufweist,
- mit einer Verriegelung (80) für eine Längsverstellung dieser Schienen gegeneinander, die Verriegelung (80) weist
a) mindestens einen Sperrzahn (82) und
b) eine Rastenleiste (90) mit in Längsrichtung der Schienen hintereinander angeordneten Rastöffnungen (91) auf, die mit der Bodenschiene (50) verbunden ist,
- mit einer Memoryeinrichtung,
c) die die Memoryleiste (17) aufweist, welche in einem Periodenmaß m in Längsrichtung der Schienen hintereinander angeordnete Zähne aufweist,
mit allen Merkmalen des Anspruchs 1,
**dadurch gekennzeichnet, dass** die Memoryleiste (17) nach dem Zusammenfügen von Bodenschiene (50) und Sitzschiene (52) in Längsrichtung dieser Schienen (50, 52) in dem von der Bodenschiene (50) und der Sitzschiene (52) begrenzten, kanalförmigen Hohlraum eingebracht wird, dass die Memoryleiste (17) Haken (170) aufweist, dass die Bodenschiene diesen Haken (170) angepasste Hakenöffnungen (172) aufweist, und dass die Haken in die Hakenöffnungen (172) eingehakt werden.

## Claims

1. A vehicle seat
- with a base frame comprising at least one floor rail (50) and a seat rail (52) guided therein, the rails (50, 52) extend in a longitudinal direction,
- with a lock (80) for a longitudinal adjustment of these rails relative to each other in the longitudinal direction, the lock (80) having
a) several ratchet teeth (82), which can be engaged independently from one another and disengaged jointly and which are constructionally identical and are disposed one behind the other at a periodic interval p in the longitudinal direction, and
b) a latching strip (90) with latching openings (91) disposed one behind the other at a periodic interval r in the longitudinal direction of the rails, which is connected to the floor rail (50),
- with a memory device,
c) comprising a memory strip (17) comprising teeth that are disposed one behind the other in a periodic interval m in the longitudinal direction of the rails,
d) comprising a triggering lever (3) disposed so as to be pivotable on the seat rail (52) and having a flank A (100),
e) comprising a slider (9) guided so as to be displaceable in the longitudinal direction of the rails on a guide member (102) connected to the seat rail (52), and
f) comprising a carriage (1) comprising a housing which is guided on the memory strip (17) in the longitudinal direction of the rails and in which a latching member (4) comprising a latching tooth (94) cooperating with the teeth of the memory strip (17) is pivotably mounted,
- with a seat support (58) which is connected to the base frame and on which a retaining cam (78) is pivotably mounted,
- with a seatrest (62),
g) connected to the seat support (58) so as to be pivotable about a pivoting axis (72),
h) comprising a trigger (64) by means of which the folding of the seatrest (62) forward about the pivoting axis (72) can be triggered,
i) comprising a stop cooperating with the retaining cam (78) and retaining the seatrest (62) in a forwardly folded position, and
j) comprising a pin (81),
- with an unlocking Bowden cable (20) whose core is connected at an upper end to the pin (81) and at a lower end to an unlocking flap (84) of the lock (80) and whose jacket is disposed at an upper end on the seat support (58), and
- with a comfort Bowden cable (21) whose core is connected at an upper end to the retaining cam (78) and at a lower end to the slider (9) and whose jacket is connected at an upper end to the seat support (58) and at a lower end to the seat rail (52),
wherein the periodic interval m of the memory strip (17) is equal to the distance of two immediately adjacent latching positions of the ratchet teeth (82) and the latching strip (90); and the components triggering lever (3), slider (9) and mounting member (7) form a structural unit which can be preassembled and which is installed in the seat rail (52).

2. The vehicle seat according to claim 1, **characterized in that** the slider (9) comprises an actuating arm (104) that protrudes through a hole in the seat rail (52).

3. The vehicle seat according to any one of the preceding claims, **characterized in that** the slider (9) comprises an actuating lug (106), that the latching member (4) comprises a lug (96), and that the actuating lug (106) and the lug (96) come into contact with each other.

4. The vehicle seat according to any one of the preceding claims, **characterized in that** a mounting member (7) is provided which is fixed on the seat rail (52) and forms an accommodating space in which the triggering lever (3) is accommodated.

5. The vehicle seat according to any one of the preceding claims, **characterized in that** the slider (9) comprises a window (99), that the guide member (102) reaches into this window (99) and that the window (99) has, in the longitudinal direction of the rails, an oversize of at least four millimeters over the length size of the guide member (102).

6. The vehicle seat according to any one of the preceding claims, **characterized in that** a mounting member (7) is provided on which the triggering lever (3) is pivotably mounted and on which the guide member (102) is provided.

7. The vehicle seat according to claim 1, **characterized in that** at least one of the following features is satisfied additionally:
- the components memory strip (17) and carriage (1) are located in a channel-shaped cavity delimited by the rails,
- the teeth of the memory strip (17) extend in an x-y-plane,
- the retaining cam (78) is biased by a first spring in the latching direction with the stop, whereby the core of the comfort Bowden cable (21) is elastically biased,
- the jacket of the unlocking Bowden cable (20) has a first course in the normal state, and a second course in the actuated state of this unlocking Bowden cable (20), the two courses are different, the clear distance between the two ends of the jacket differs by at least 4 mm, preferably by at least 5 mm,
- the lower end of the jacket of the unlocking Bowden cable (20) is disposed on the triggering lever (3), and
- the latching member (4) executes a locking movement in the x-y-plane.

8. The vehicle seat according to claim 1, **characterized in that** the periodic interval m of the memory strip (17) is equal to the difference of the periodic interval r of the latching openings (91) and the periodic interval p of the ratchet teeth.

9. The vehicle seat according to any one of the preceding claims, **characterized in that** a pin guide (30) for the ratchet teeth, which is connected to the seat rail (52), is provided.

10. The vehicle seat according to any one of the preceding claims, **characterized in that** a main spring (11) is provided which acts on the triggering lever (3) and elastically biases that into a final position, and that the main spring (11) is disposed in the channel-shaped cavity delimited by the floor rail (50) and the seat rail (52).

11. The vehicle seat according to any one of the preceding claims, **characterized in that** a cable tab (150), a comfort roller (152) mounted rotatably therein and a short cable (154) are disposed between the lower end of the core of the comfort Bowden cable (21) and the slider (9), wherein the core acts on the cable tab (150), the short cable (154) grips around the comfort roller (152) and an end of the short cable (154) acts on the slider (9), the other end being attached to the seat rail (52).

12. The vehicle seat according to any one of the preceding claims, **characterized in that** an unlocking roller (156) rotatably mounted on a bolt (158) connected to a cross bar (86) is provided between the lower end of the core of the unlocking Bowden cable (20) and the unlocking flap (84), and that the lower end of the core is routed around the unlocking roller (156) and fixed to the seat rail (52).

13. The vehicle seat according to any one of the preceding claims, **characterized in that** the memory strip (17) comprises hooks (170), and that the floor rail (50) comprises hook openings (172) adapted to these hooks (170).

14. A method for attaching a memory strip (17) to a floor rail (50) of a vehicle seat
- with a base frame comprising at least the floor rail (50) and a seat rail (52) guided therein,
- with a lock (80) for a longitudinal adjustment of these rails relative to each other, the lock (80) comprising
a) at least one ratchet tooth (82) and
b) a latching strip (90) with latching openings (91) disposed one behind the other in the longitudinal direction of the rails, which is connected to the floor rail (50),
- with a memory device,
c) comprising a memory strip (17) comprising teeth that are disposed one behind the other in a periodic interval m in the longitudinal direction of the rails,
with all the features of claim 1,
**characterized in that** the memory strip (17), after the assembly of the floor rail (50) and the seat rail (52), is inserted in the longitudinal direction of these rails (50, 52) into the channel-shaped cavity delimited by the floor rail (50) and the seat rail (52), that the memory strip (17) comprises hooks (170), that the floor rail comprises hook openings (172) adapted to these hooks (170), and that the hooks are hooked into the hook openings (172).

## Revendications

1. Siège de véhicule comprenant
- un châssis qui présente au moins un rail de fond (50) et un rail de siège (52) guidé dans celui-ci, les rails (50, 52) s'étendent dans une direction longitudinale,
- un verrouillage (80) pour un réglage longitudinal de ces rails l'un contre l'autre dans la direction longitudinale, ledit verrouillage (80) présente
a) une pluralité de dents de blocage (82) qui peuvent s'enclencher indépendamment les unes des autres et être désenclenchées en commun et qui sont de construction identique et disposées les unes derrière les autres dans une mesure de période p dans la direction longitudinale, et
b) une barre à crans (90) qui comprend des ouvertures d'arrêt (91) disposées les unes derrière les autres dans la direction longitudinale des rails, dans une mesure de période r, et qui est reliée au rail de fond (50),
- un dispositif mémoire
c) qui présente une barre mémoire (17) qui comprend des dents disposées les unes derrière les autres dans une mesure de période m dans la direction longitudinale des rails,
d) qui présente un levier de déclenchement (3) qui est disposé à pivotement sur le rail de siège (52) et a un flanc A (100),
e) qui présente un coulisseau (9) lequel est guidé à déplacement dans la direction longitudinale des rails sur un élément de guidage (102) qui est relié au rail de siège (52), et
f) qui présente un chariot (1) qui comprend un boîtier lequel est guidé sur la barre mémoire (17) dans la direction longitudinale des rails et dans lequel un élément d'arrêt (4) est logé à pivotement qui présente une dent d'arrêt (94) coopérant avec les dents de la barre mémoire (17),
- un support de siège (58) qui est relié au châssis et sur lequel une came de maintien (78) est logée à pivotement,
- un dossier (62)
g) qui est relié au support de siège (58) de manière à pouvoir pivoter autour d'un axe de pivotement (72),
h) qui présente un déclencheur (64) par l'intermédiaire duquel on peut déclencher un rabattement du dossier (62) autour de l'axe de pivotement (72),
i) qui présente une butée qui coopère avec ladite came de maintien (78) et maintient le dossier (62) dans une position rabattue, et
j) qui présente une tige (81),
- un câble Bowden de déverrouillage (20) dont l'âme est reliée, à une extrémité supérieure, à ladite tige (81) et, à une extrémité inférieure, à un clapet de déverrouillage (84) du verrouillage (80), et dont la gaine est disposée à une extrémité supérieure sur ledit support de siège (58), et
- un câble Bowden de confort (21) dont l'âme est reliée, à une extrémité supérieure, à ladite came de maintien (78) et, à une extrémité inférieure, audit coulisseau (9), et dont la gaine est reliée, à une extrémité supérieure, au support de siège (58) et, à une extrémité inférieure, au rail de siège (52),
dans lequel la mesure de période m de la barre mémoire (17) est égale à la distance de deux positions d'arrêt immédiatement voisines des dents de blocage (82) et de la barre à crans (90); et les éléments levier de déclenchement (3), coulisseau (9) et élément de support (7) forment une unité apte à être prémontée qui est encastrée dans le rail de siège (52).

2. Siège de véhicule selon la revendication 1, **caractérisé par le fait que** ledit coulisseau (9) présente un bras de commande (104) qui s'étend à travers un trou ménagé dans le rail de siège (52).

3. Siège de véhicule selon l'une quelconque des revendications précédentes, **caractérisé par le fait que** le coulisseau (9) présente un nez de commande (106), que ledit élément d'arrêt (4) présente un nez (96) et que ledit nez de commande (106) et ledit nez (96) entrent en contact l'un avec l'autre.

4. Siège de véhicule selon l'une quelconque des revendications précédentes, **caractérisé par le fait qu'**un élément de support (7) est prévu qui est fixé sur le rail de siège (52) et qui forme un espace de logement à l'intérieur duquel est logé ledit levier de déclenchement (3).

5. Siège de véhicule selon l'une quelconque des revendications précédentes, **caractérisé par le fait que** ledit coulisseau (9) présente une fenêtre (99), que ledit élément de guidage (102) s'engage dans cette fenêtre (99) et que la fenêtre (99) présente dans la direction longitudinale des rails une surmesure d'au moins quatre millimètres par rapport à la mesure de longueur de l'élément de guidage (102).

6. Siège de véhicule selon l'une quelconque des revendications précédentes, **caractérisé par le fait qu'**un élément de support (7) est prévu sur lequel ledit levier de déclenchement (3) est logé à pivotement et sur lequel est prévu ledit élément de guidage (102).

7. Siège de véhicule selon la revendication 1, **caractérisé par le fait que**, en sus, encore au moins l'une des caractéristiques suivantes est satisfaite:
- les éléments barre mémoire (17) et chariot (1) se trouvent dans une cavité en forme de canal délimitée par les rails,
- les dents de la barre mémoire (17) s'étendent dans un plan x-y,
- la came de maintien (78) est précontrainte par un premier ressort dans la direction d'enclenchement avec la butée, ce par quoi l'âme du câble Bowden de confort (21) est précontrainte élastiquement,
- la gaine du câble Bowden de déverrouillage (20) présente une première allure en état normal et une deuxième allure lorsque ce câble Bowden de déverrouillage (20) est à l'état commandé, les deux allures sont différentes, l'écartement entre les deux extrémités de la gaine est différente de 4 mm au moins, de préférence de 5 mm au moins,
- l'extrémité inférieure de la gaine du câble Bowden de déverrouillage (20) est disposée sur le levier de déclenchement (3), et
- l'élément d'arrêt (4) exerce un mouvement de verrouillage dans le plan x-y.

8. Siège de véhicule selon la revendication 1, **caractérisé par le fait que** la mesure de période m de la barre mémoire (17) est égale à la différence de la mesure de période r des ouvertures d'arrêt (91) et la mesure de période p des dents de blocage.

9. Siège de véhicule selon l'une quelconque des revendications précédentes, **caractérisé par le fait qu'**un guidage de tige (30) pour les dents de blocage, qui est relié au rail de siège (52), est prévu.

10. Siège de véhicule selon l'une quelconque des revendications précédentes, **caractérisé par le fait qu'**un ressort principal (11) est prévu qui se prend sur le levier de déclenchement (3) et précontraint celui-ci élastiquement dans une position extrême, et que ledit ressort principal (11) est disposé dans ladite cavité en forme de canal délimitée par le rail de fond (50) et le rail de siège (52).

11. Siège de véhicule selon l'une quelconque des revendications précédentes, **caractérisé par le fait qu'**une languette de traction (150), un galet de confort (152) y logé à rotation et un court câble (154) sont disposés entre l'extrémité inférieure de l'âme du câble Bowden de confort (21) et le coulisseau (9), dans lequel l'âme se prend sur ladite languette de traction (150), le court câble (154) s'étend autour du galet de confort (152) et une extrémité du court câble (154) se prend sur le coulisseau (9), l'autre extrémité est fixée au rail de siège (52).

12. Siège de véhicule selon l'une quelconque des revendications précédentes, **caractérisé par le fait qu'**entre l'extrémité inférieure de l'âme du câble Bowden de déverrouillage (20) et le clapet de déverrouillage (84) est prévu un galet de déverrouillage (156) qui est logé à rotation sur un boulon (158) lequel est relié à une traverse (86), et que l'extrémité inférieure de l'âme est menée autour dudit galet de déverrouillage (156) et est fixée au rail de siège (52).

13. Siège de véhicule selon l'une quelconque des revendications précédentes, **caractérisé par le fait que** la barre mémoire (17) présente des crochets (170) et que le rail de fond (50) présente des ouvertures pour crochets (172) adaptées à ces crochets (170).

14. Procédé de montage d'une barre mémoire (17) sur un rail de fond (50) d'un siège de véhicule comprenant
- un châssis qui présente au moins ledit rail de fond (50) et un rail de siège (52) guidé dans celui-ci,
- un verrouillage (80) pour un réglage longitudinal de ces rails l'un contre l'autre, ledit verrouillage (80) présente
a) au moins une dent de blocage (82) et
b) une barre à crans (90) qui comprend des ouvertures d'arrêt (91) disposées les unes derrière les autres dans la direction longitudinale des rails, et qui est reliée au rail de fond (50),
- un dispositif mémoire
c) qui présente ladite barre mémoire (17) qui comprend des dents disposées les unes derrière les autres dans une mesure de période m dans la direction longitudinale des rails,
présentant l'ensemble des caractéristiques de la revendication 1,
**caractérisé par le fait que** la barre mémoire (17), après avoir assemblé le rail de fond (50) et le rail de siège (52) dans la direction longitudinale de ces rails (50, 52), est insérée dans la cavité en forme de canal délimitée par le rail de fond (50) et le rail de siège (52), que la barre mémoire (17) présente des crochets (170), que le rail de fond présente des ouvertures pour crochets (172) adaptées à ces crochets (170), et que les crochets sont accrochés dans les ouvertures pour crochets (172).
